# EUROPÄISCHE PATENTSCHRIFT

(11) **EP 1 154 229 B1**
(45) Veröffentlichungstag und Bekanntmachung des Hinweises auf die Patenterteilung: **23.09.2009**
(21) Anmeldenummer: 01111082.2
(22) Anmeldetag: 09.05.2001
(51) Int. Cl.: G01B 11/27

(54) **Vorrichtung zur quantitativen Beurteilung der fluchtenden Lage zweier Maschinenteile, Werkstücke oder dergleichen**
Device for the assessment of the quantitative alignment of two machine parts, tools or similar
Dispositif pour l'évaluation quantitative de l'alignement de deux pièces de machine, des outils ou similaires

(30) Priorität: 09.05.2000 DE 20008228 U
(43) Veröffentlichungstag der Anmeldung: 14.11.2001
(73) Patentinhaber: Prüftechnik Dieter Busch AG, 85737 Ismaning (DE)
(72) Erfinder: Unger, Andreas, 85748 Garching b. München (DE); Lysen, Heinrich, 85748 Garching b. München (DE)

(56) Entgegenhaltungen:
- EP-A- 1 134 548
- EP-A2- 0 962 746
- US-A- 5 367 373
- US-A- 5 513 000
- US-A- 5 798 828

## Beschreibung

Die Erfindung bezieht sich auf eine Vorrichtung zur Beurteilung der fluchtenden Lage zweier Maschinenteile, zum Beispiel Wellen, Werkzeugmaschinenspindeln, Werkstücken oder dergleichen.

Vorrichtungen der gattungsgemässen Art sind seit mehreren Jahren in Gebrauch und zeichnen sich dadurch aus, dass ihre Anwendung sehr viel Arbeitszeit einspart.

Neben den in der DE 3473344.2-08 und der EP 0183811 genannten Vorrichtungen ist in diesem Zusammenhang auf die Lehre der DE 38 14 466 und der DE 199 23 116 hinzuweisen.

In den beiden zuletzt genannten Schriften wird dargestellt, wie die fluchtende Lage zweier Maschinenteile, insbesondere zweier miteinander zu verbindender Wellen, oder der Ausrichtung zwischen einer Maschinenspindel und einem Werkstück, unter Verwendung eines Messmittels mit einer einzigen strahlerzeugenden Lichtquelle überprüft, vermessen und beurteilt werden kann.

In der US 5,513,000 wird weiter ein Autokollimator beschrieben, in dem ein Winkelversatz zwischen zwei Lichtstrahlen, die von einem Lichtreflektor zurückgeworfen werden, dazu verwendet wird, einen Winkelversatz des Lichtreflektors zu ermitteln. Eine Ermittlung eines translatorischen Versatzes ist hier nicht vorgesehen.

Es ist Aufgabe der Erfindung, die bekannten Vorrichtungen derart zu verbessern, dass signifikant niedrigere Herstellungskosten der Geräte erzielt werden können. Damit soll deren Einsatz auch in solchen Umfeldern möglich werden, wo dies aus Kostengründen bisher entweder nicht in Frage kam oder allenfalls zögernd akzeptiert wurde.

Diese Aufgabe wird dadurch gelöst, dass eine Vorrichtung zur Vermessung oder Beurteilung der Relativlage zweier Maschinenteile, Werkzeuge, Werkstücke oder dergleichen angegeben wird, welche folgende Merkmale aufweist: In einem ersten Gehäuse befindet sich eine Einrichtung zur Erzeugung mindestens zweier Lichtstrahlen schmalen Querschnitts, wobei mindestens zwei separate Lichtquellen vorhanden sind. Die separaten Lichtquellen stellen bevorzugt Laserlichtquellen dar, welche auch Licht von unterschiedlicher Farbe aussenden können. Die mindestens zwei Lichtquellen werden wechselweise oder sukzessiv bestromt, und zwar mittels einer Schalt- oder Multiplexeinheit. Weiterhin ist gemäß der Erfindung mindestens ein lichtempfindlicher optoelektronischer Sensor vorgesehen, welche(r) jeweils geeignet ist bzw. sind, zumindest den Schwerpunkt einer auf ihn einfallenden Lichtverteilung nach zwei kartesischen Koordinaten zu registrieren und auszuweisen, d.h. zu sensieren und als diesbezügliche Signal-Kombination abzugeben. Dem bzw. den lichtempfindlichen Sensor(en) ist eine Auswerteeinheit nachgeschaltet. Mit dieser können die Signale eines bzw. mehrerer lichtempfindlichen Sensors(-en) ausgewertet werden, ggf. auch ein vom Multiplexer oder der Schalteinheit abgegebenes Synchronisationssignal. Gemäß der Erfindung ist noch ein zweites Gehäuse vorgesehen, in welchem sich eine Reflektorkombination befindet. Die Reflektorkombination enthält zwei reflektierende Elemente, welche jeweils einer der mindestens zwei separaten Lichtquellen zugeordnet sind. Die reflektierenden Elemente können unterschiedlich ausgestaltet sein. Es wird für die reflektierenden Elemente eine Auswahl getroffen, und zwar entweder zwei Dachkantenspiegel oder zwei Dachkantprismen, deren Dachkanten zweinander senkrecht stehen, oder ein Planspiegel und ein Tripelprisma.

Durch eine solche Auswahl an Systemkomponenten sind deutliche Kosteneinsparungen bei der Bereitstellung eines Gerätes mit hoher Bedienerfreundlichkeit erzielbar.

Die Erfindung wird anhand der Figuren erläutert.

Es zeigt
- Fig. 1: eine schematische Seitenansicht einer einfachen Ausführungsform der
- Fig. 2: eine schematische Seitenansicht einer bevorzugten Ausführungsform der Erfindung
- Fig. 3: eine Ausführungsform der Erfindung, welche eine abbildende Optik in Form einer konvexen Linse aufweist
- Fig.4: eine Ausführungsform der Erfindung mit zwei abbildenden Linsen
- Fig. 5: eine perspektivische Darstellung eines Reflexionselementes gemäß der ersten Ausgestaltung der Erfindung
- Fig. 6: eine schematische Seitenansicht einer speziellen Ausfiihrungsform der Erfindung
- Fig. 7: ein Beispiel eines Impulsdiagramms

Die Erfindung sieht zwei Lichtstrahl-Quellen, z.B. Laserlichtstrahler 10, 20 vor, in der bevorzugten Ausführungsform jedoch nur einen einzigen lichtempfindlichen Sensor 200, der zweidimensional wirkt. Die einzelnen Lichtstrahler an sich und die Sensoren dieser Art sind per se bekannt. Gemäss der Erfindung sind die Lichtstrahl-Quellen jedoch durch einen Multiplexer 100 wechselweise, d.h. alternativ, ansteuerbar, und zwar über die Leitungen 120, 110, so daß immer nur jeweils eine dieser Quellen einen räumlich relativ schmal ausgeblendeten Lichtstrahl aussendet. Die Wechselfrequenz soll dabei mindestens ca. 2 Hz, bevorzugt jedoch einige hundert Hertz betragen. Die emittierten Strahlen sind mit Bezugsziffern 12, 22 bezeichnet.

Die Lichtstrahlquellen 10, 20 sind gegenseitig und relativ zum Sensor 200 fest beabstandet und in einem Gehäuse 105 angebracht. Als weitere, nicht gezeigte Systemkomponenten sind eine Auswerte- oder Ausleseelektronik für den Sensor 200 zu nennen sowie eine Stromversorgungseinheit, welche über einen Anschluss 90 z.B. den Multiplexer 100 speist.
Die Auswerteelektronik empfängt auch ein Synchronisationssignal, welches der Multiplexer 100 bereitstellt, so dass rekonstruierbar wird, welcher der Lichtstrahlen 14, 24 gerade empfangen wurde.

In einigem Abstand vom Gehäuse 105 ist das passiv wirkende Reflexionselement 400 angebracht, welches bevorzugt in 4 Koordinaten, nämlich zwei Winkelkoordinaten und zwei Translationskoordinaten verlagert werden kann und somit zur Messung von Parallel-Versätzen sowie Winkelversätzen geeignet sein soll.

Das passiv wirkende Reflexionselement kann eine unterschiedliche Kombination von reflektierenden Elementen aufweisen.

Eine erste Kombination besteht z.B. aus einem Planspiegel, welcher beispielsweise den Strahl 22 nach zwei Winkelkoordinaten ablenkt, nicht jedoch nach einer Translationskoordinate, und zusätzlich einem sogenannten Tripelspiegel (oder Tripelprisma), welcher für die Registrierung von zwei Translationskoordinaten dient, aber keine Ablenkung nach Winkelkoordinaten bewirkt.

Eine andere, bevorzugte Kombination besteht aus einem ersten Dachkantspiegel oder Dachkantprisma 300 und einem zweiten Dachkantspiegel oder Dachkantprisma 330. Beide genannten optischen Elemente sind zueinander fest beabstandet, bevorzugt durch eine Verklebung. Die Dachkantprismen oder Spiegel können dabei aus Glas, Metall oder Kunststoff hergestellt sein.

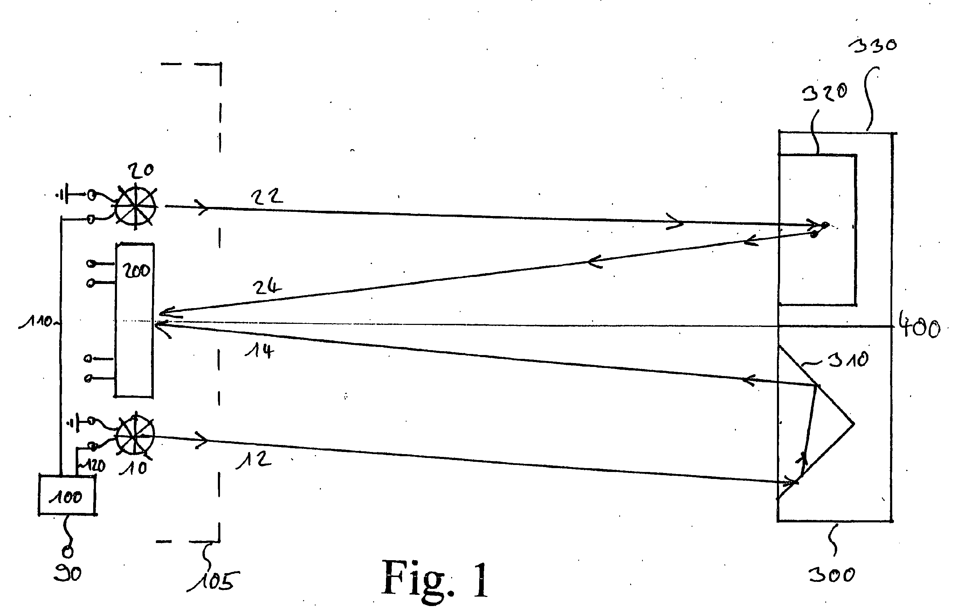

Wie in Fig. 1 gezeigt, ist die Orientierung der "Dachkanten" zueinander senkrecht, so dass durch Bezugsziffer 320 eine "Dachfläche" und durch Bezugsziffer 310 eine "Giebelfläche" ausgewiesen wird. Die Dachkantspiegel oder Prismen lenken einen einfallenden Lichtstrahl somit nach jeweils einer einzigen Winkelkoordinate und einer einzigen Translationskoordinate aus. Durch die Kombination der Dachkantspiegel oder Dachkantprismen ist es somit möglich, insgesamt zwei Winkelkoordinaten und zwei Translationskoordinaten zu vermessen, sofern die reflektierten Strahlen 14, 24 auf den Sensor 200 auftreffen und dort wechselweise hinsichtlich ihres Auftreffpunktes in den dortigen x- und y-Koordinaten vermessen werden.

Es spielt dabei keine Rolle, ob der Sensor 200 pixelorientiert ist oder als zweidimensional wirkender positionsempfindlicher, ganzflächiger Halbleitersensor ausgebildet ist.

Bei Bedarf kann der in Fig. 1 gezeigte Strahlengang durch folgendes modifiziert werden: Eine grössere Empfangsapertur wird dadurch bereitgestellt , dass die Strahlen 14, 24 durch eine vor den Sensor 200 geschaltete Sammellinse in angenähert fokussierender Weise konzentriert werden (nicht gezeigt). Zur Elimination von Streulicht kann desweiteren ein schmalbandiges optisches Filter vorgesehen werden, welches auf die Lichtwellenlänge der Lichtstrahl-Quellen 10, 20 abgestimmt ist.

Die Vorrichtung ist sehr bedienerfreundlich, da nur die Komponenten innerhalb des Gehäuses 105 mit Energie versorgt werden müssen, so dass der jeweilige Auf- und Abbau der Vorrichtung, welche insbesondere zur quantitativen Beurteilung der fluchtenden Lage zweier Maschinenteile, Werkstücke oder dergleichen verwendet werden kann, in bequemer Weise erfolgen kann.

Bei Bedarf kann die erfindungsgemässe Vorrichtung auch dazu herangezogen werden, die Relativlage von Gehäuse 105 zu der Kombination aus den Dachkantprismen oder -spiegeln 300, 330 betreffend einer 5. Koordinate zu bestimmen. Diese Koordinate betrifft nämlich einen Verdrehwinkel dieser Komponenten bezüglich der Verbindungslinie, welche in etwa mit der Richtung der Strahlen 12, 14, 22, 24 übereinstimmt.

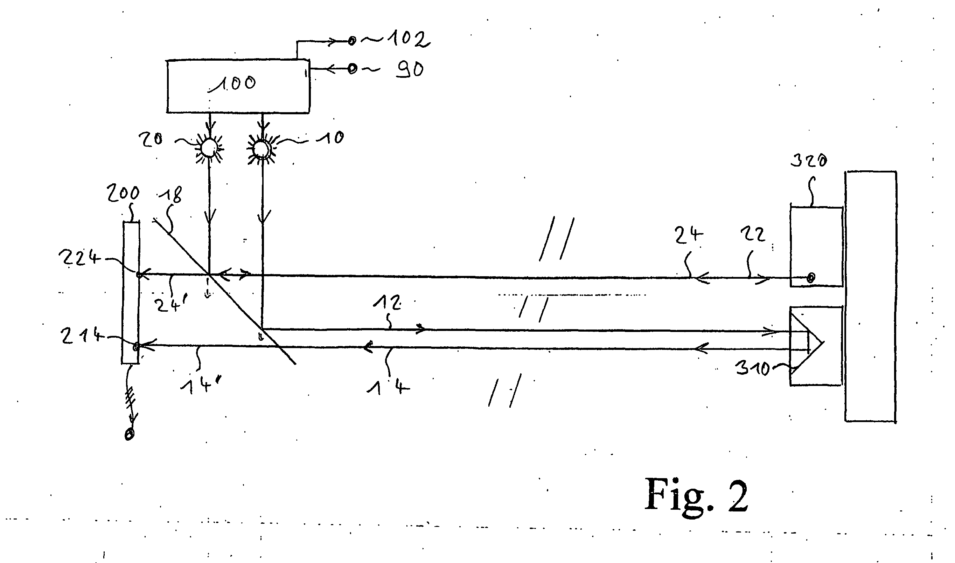

Die in Fig. 2 gezeigte Ausgestaltung der Erfindung gestattet einen extendierten Arbeitsbereich.
Dieser wird dadurch ermöglicht, daß ein teildurchlässiger Umlenk-Reflektor 18 vorgesehen ist. Der Abstand der Lichtquellen 10, 20 ist dabei auf den Abstand der Reflektor-Elemente abgestimmt. Damit können zwei im wesentlichen parallel gerichtete Laserlichtstrahlen 12, 22 auf die Reflektoren emittiert werden, so daß diese Strahlen bei idealem Ausrichtzustand von Sender und Reflektor auch als parallele Laserlichtstrahlen 14, 24 bzw. 14', 24' in Richtung des Detektors 200 reflektiert werden. Sie treffen dort als Lichtpunkte 214, 224 auf. Dieser Lösung haftet jedoch der Nachteil an, daß Anteile des Laserlichts sowohl beim ersten als auch beim zweiten Auftreffen auf den teildurchlässigen Reflektor 18 verloren gehen, was durch entsprechend stärkere Lichtquellen kompensiert werden kann.

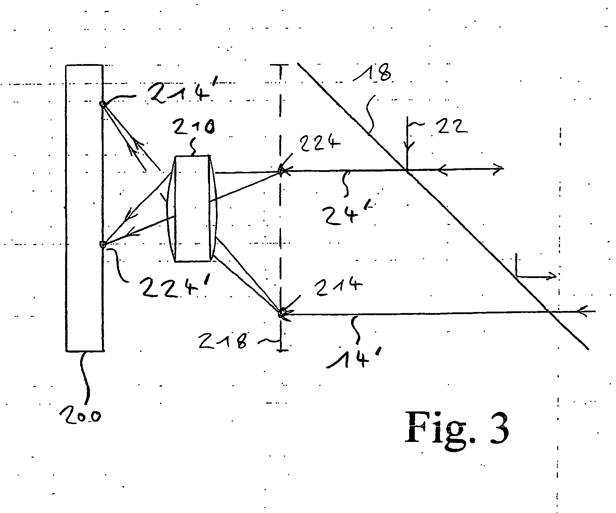

In Fig. 3 wird gezeigt, daß die Lichtstrahlen 14', 24' auch auf einen semitransparenten Projektionsschirm oder eine Mattscheibe 218 gerichtet werden können. Die dort (wechselweise) in Erscheinung tretenden Lichtpunkte 214, 224 können dann mittels einer abbildenden Optik 210 auf den Detektor oder Sensor 200 projiziert werden. Dies ist deswegen von Vorteil, weil die Dimensionen einer Empfangsfläche eines kostengünstigen Sensors 200 typischerweise kleiner sind als die Abmessungen einer für die Praxis bevorzugten Target-Fläche für die Lichtstrahlen 14', 24'

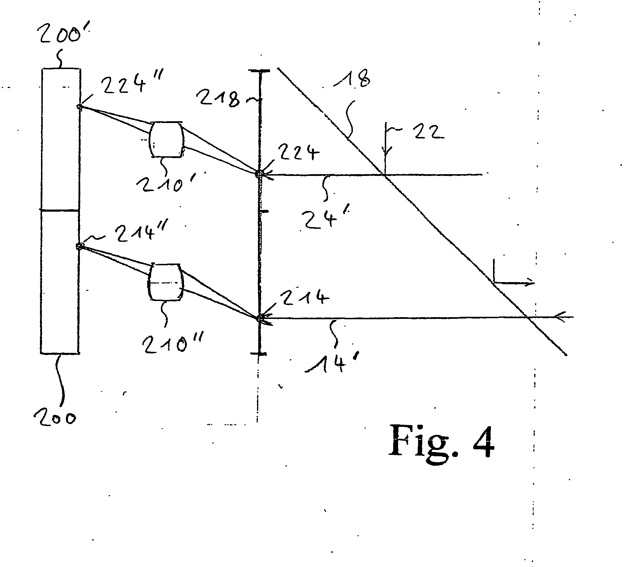

Gemäß Fig. 4 können die Anforderungen an die Optik dadurch geringer gehalten werden, daß der Projektionsschirm in zwei Hälften aufgeteilt wird. Jede dieser Hälften wird dann mit einer separaten Optik 210', 210" auf die Anteile 200, 200' des Sensors projiziert.

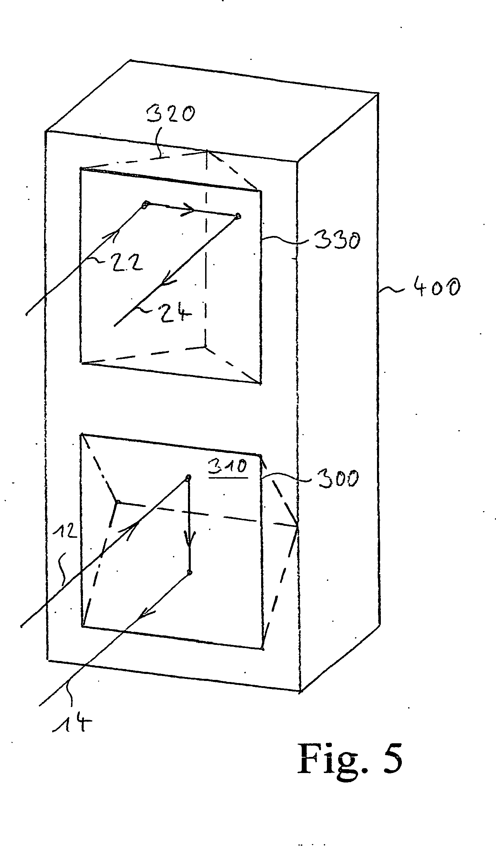

In Fig. 5 wird der Strahlengang näher dargestellt, wie er den Fig. 1 und 2 zugrundegelegt ist. Wie bereits erwähnt, wird bei Verwendung von Dachkantprismen ein einfallender Lichtstrahl 12, 22 nach Maßgabe jeweils nur einer Winkelauslenkung und nur einer translatorischen Auslenkung des Reflektors 400 in definierter Weise zurückgeworfen. Veränderungen der Lage des Reflektors hinsichtlich der restlichen Koordinaten bleiben ohne meßtechnischen Effekt, wie dies nach dem Stand der Technik an sich bekannt ist.

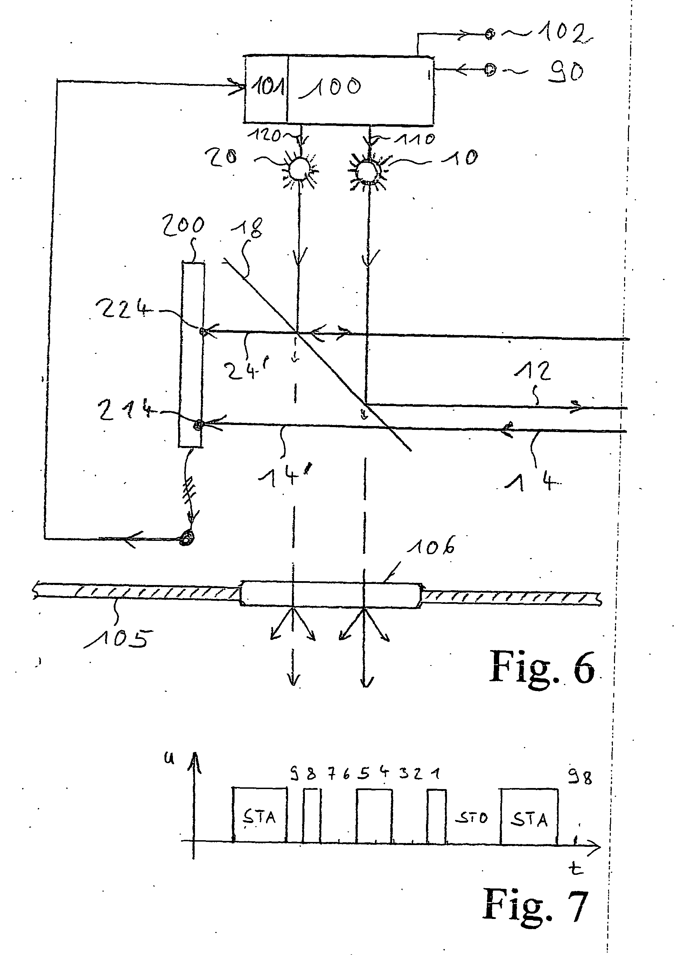

Gemäß einem weiteren Aspekt der Erfindung wird in Fig. 6 gezeigt, wie ein Teil der Lichtverluste am teildurchlässigen Reflektor 18 sinnvoll und vorteilhaft genutzt werden können. Diese werden nämlich durch ein farbfilterndes Fenster 106 im Gehäuse 105 des Sendeteils gestreut und treten dann aus dem Gehäuse in den umgebenden Raum aus. Auf diese Weise können die Lichtstrahlen gleichzeitig als Informationsträger dienen, und zwar zum Zwecke der Datenübertragung der optoelektronisch erfaßten Signal-Größen, welche die translatorischen und angularen Versatzmaße repräsentieren. Es bietet sich an, eine solche Datenübertragung in codierter Form durchzuführen. Hierzu ist vorgesehen, daß die Lichtstrahlen von den Lichtquellen 10, 20 nicht kontinuierlich emittiert werden, sondern in pulsförmiger Weise, und daß weiterhin die pulsförmige Emission nach Maßgabe aktueller und zu übertragender Informationswerte stattfindet. Die Informationswerte können dabei neben den genannten optoelektronisch erfaßten Signal-Größen auch z.B. Drehlagen umfassen. Die genannten Drehlagen werden bevorzugt mittels Inclinometern sensiert.

Auf diese Weise kann ein erzeugter Lichtstrahl also zur Ausführung zweier Funktionen herangezogen werden: zum einen zu meßtechnischen Zwecken, und zum anderen zu Zwecken der Signalübertragungstechnik. Eine solche Signalübertragungstechnik mit zeitlich seriell codierten Signalen kann auf synchroner oder asynchroner Datenübertragungstechnik basieren. Zur Erzeugung entsprechender Serialdaten ist vorgesehen, daß ein Rechner 101 zunächst die gemessenen Positions-Signale mittels geeigneter, an sich bekannter Verstärkungs-, Umrechnungs- und Serialdatenwandlungsstufen (nicht näher ausgewiesen) in Serialdaten konvertiert, so daß mit diesen die Lichtemission von zumindest einer der Lichtquellen 10, 20 zeitlich moduliert werden kann.

In Fig. 7 wird als Beispiel dargestellt, wie die aus Fenster 106 austretenden Licht-Impulse byteweise in an sich bekannter asynchroner Datenübertragung codiert sind. Der Block STA bezeichnet dabei ein oder mehrere sog. Start-Bits eines zu sendenden Bytes, während die Ruhephase STO ein oder mehrere sog. Stop-Bits symbolisiert, und die einzelnen Bits mit den Ziffern 1 bis 9 bezeichnet sind. Die Verwendung übergeordneter Transmissionsmechanismen in Hard- und Software sind dem Fachmann bekannt und werden daher an dieser Stelle nicht näher rezitiert. - Da die Erfindung zwei lichtemittierende Vorrichtungen vorsieht, ist es von Vorteil, wenn beide nach Art der besagten Pulscodemodulation betrieben werden. Dabei stehen vielerlei Möglichkeiten offen. Beispielsweise können die einzelnen zu übertragenen Bits in jeweils abwechselnder Folge von der einen und der anderen lichtemittierenden Vorrichtung gesendet werden. Oder es wird in jeweils abwechselnder byteweisen Folge gesendet. (Der Parallelbetrieb der lichtemittierenden Vorrichtungen ist wegen der Grundidee der Erfindung weniger vorteilhaft. Dieser ist zwar nicht ausgeschlossen, läßt dann aber keine gleichzeitige Datenerfassung zu). Insgesamt steht wegen der Existenz von zwei lichtemittierenden Vorrichtungen eine erhöhte optische Ausgangsleistung zur Verfügung, was größere Übertragungsdistanzen zu einem zugehörigen Empfangs- und Auswerteeinrichtung (nicht gezeigt) zuläßt und somit ein vorteilhafter Nebeneffekt der Erfindung ist. Als zugehörige Empfangseinrichtungen zum Empfang und zur Aufbereitung des signalmodulierten Lichtes stehen an sich bekannte Subsysteme zur Verfügung. - Bei der Ausführungsform nach Fig. 6 ist es von Vorteil, einen pixelorientierten Sensor 200 zu verwenden. Auf diese Weise ist es möglich, daß in das Gehäuse eintretende Anteile von Tageslicht als solche erkannt und in Abzug gebracht werden können. Eine Verfälschung der Meßresultate durch Fremdlicht wird damit verhindert.

## Patentansprüche

1. Vorrichtung zur Vermessung oder Beurteilung der Relativlage zweier Maschinenteile, Werkzeuge, oder Werkstücke, umfassend
- ein erstes Gehäuse (105), welches umschliesst:
- eine Einrichtung, enthaltend mindestens zwei separate Lichtquellen (10, 20), zur Erzeugung jeweils mindestens eines Lichtstrahls (12, 22) schmalen Querschnitts,
- eine Multiplexeinrichtung (100) zur wechselweisen Bestromung der mindestens zwei Lichtquellen (10, 20)
- mindestens einen lichtempfindlichen Sensor (200), mit dem der Schwerpunkt einfallender Lichtstrahlen (14,24) nach zwei kartesischen Koordinaten registriert werden kann
- eine Auswerteeinheit zur Auswertung der Signale des lichtempfindlichen Sensors und eines vom Multiplexer abgegebenen Synchronisationssignals
- eine in einem zweiten Gehäuse angebrachte Reflektorkombination (400),
**gekennzeichnet durch**
eine Kombination aus zwei reflektierenden Elementen (300, 330), die aus zwei Dachkantspiegeln oder zwei Dachkantprismen besteht, deren Dachkanten zueinander senkrecht stehen.

2. Vorrichtung zur Vermessung oder Beurteilung der Relativlage zweier Maschinenteile, Werkzeuge, oder Werkstücke, umfassend
- ein erstes Gehäuse (105), welches umschliesst:
- eine Einrichtung zur Erzeugung mindestens zweier Lichtstrahlen (12, 22) schmalen Querschnitts, enthaltend mindestens zwei separate Lichtquellen (10, 20)
- eine Muldplexeinrichtung (100) zur wechselweisen Bestromung der mindestens zwei Lichtquellen (10, 20)
- mindestens einen lichtempfindlichen Sensor (200), mit dem der Schwerpunkt einfallender Lichtstrahlen (14,24) nach zwei kartesischen Koordinaten registriert werden kann
- eine Auswerteeinheit zur Auswertung der Signale des lichtempfindlichen Sensors und eines vom Multiplexer abgegebenen Synchronisationssignals
- eine in einem zweiten Gehäuse angebrachte Reflektorkombination (400),
**gekennzeichnet durch**
eine Kombination aus zwei reflektierenden Elementen (300, 330), die aus einem Planspiegel und einem Tripelprisma besteht.

3. Verfahren zum Betrieb einer Vorrichtung nach Anspruch 1 oder 2, **dadurch gekennzeichnet, daß** die Lichtquellen wechselweise und nach Maßgabe eines Signalcodes bestromt werden, welcher die translatorischen und angularen Versatzmaße repräsentiert, wie sie vom optoelektronischen Empfangsbaustein (200) sensiert werden.

4. Verfahren nach Anspruch 3, wobei die Lichtquellen nach Maßgabe eines asynchronen Serialdatenübertragungsverfahrens bestromt werden.

5. Verfahren nach Anspruch 3, wobei die Lichtquellen nach Maßgabe eines synchronen Serialdatenübertragungsverfahrens bestromt werden.

## Claims

1. Apparatus for measurement or assessment of the relative position of two machine parts, tools or workpieces, comprising
- a first housing (105) which surrounds:
- a device containing at least two separate light sources (10, 20), for production of in each case at least one light beam (12, 22) with a narrow cross section,
- a multiplexing device (100) for passing current alternately through the at least two light sources (10, 20)
- at least one light-sensitive sensor (200) by means of which the centroid of incident light beams (14, 24) can be recorded on the basis of two cartesian coordinates,
- an evaluation unit for evaluation of the signals from the light-sensitive sensor and of a synchronization signal emitted by the multiplexer,
- a reflector combination (400), which is fitted in a second housing, **characterized by** a combination of two reflective elements (300, 330), which comprises two roof edge mirrors or two roof edge prisms, whose roof edges are mutually perpendicular.

2. Apparatus for measurement or assessment of the relative position of two machine parts, tools or workpieces, comprising
- a first housing (105) which surrounds:
- a device for producing at least two light beams (12, 22) with a narrow cross section, containing at least two separate light sources (10, 20)
- a multiplexing device (100) for passing current alternately through the at least two light sources (10, 20)
- at least one light-sensitive sensor (200) by means of which the centroid of incident light beams (14, 24) can be recorded on the basis of two cartesian coordinates,
- an evaluation unit for evaluation of the signals from the light-sensitive sensor and of a synchronization signal emitted by the multiplexer,
- a reflector combination (400), which is fitted in a second housing, **characterized by** a combination of two reflective elements (300, 330), which comprises a planar mirror and a triple prism.

3. Method for operation of an apparatus according to Claim 1 or 2, **characterized in that** current is passed through the light sources alternately and on the basis of a signal code which represents the translational and angular offset measures, as are sensed by the optoelectronic receiving module (200).

4. Method according to Claim 3, with current being passed through the light sources on the basis of an asynchronous serial data transmission method.

5. Method according to Claim 3, with current being passed through the light sources on the basis of a synchronous serial data transmission method.

## Revendications

1. Dispositif pour mesurer ou évaluer la position relative de deux parties de machine, outils ou pièces usinées, comprenant
- un premier boîtier (105) qui contient :
- un dispositif incluant au moins deux sources de lumière séparées (10, 20) pour générer respectivement au moins un rayon lumineux (12, 22) de section étroite,
- un dispositif de multiplexage (100) pour l'alimentation électrique en alternance des au moins deux sources de lumière (10, 20),
- au moins un capteur sensible à la lumière (200) avec lequel peut être déterminé le barycentre des rayons lumineux (14, 24) incidents d'après deux coordonnées cartésiennes,
- une unité d'interprétation pour interpréter les signaux du capteur sensible à la lumière et un signal de synchronisation délivré par le multiplexeur,
- une combinaison de réflecteurs (400) logée dans un deuxième boîtier,
**caractérisé par** une combinaison de deux éléments réfléchissants (300, 330) qui se compose de deux miroirs triangulaires ou de deux prismes triangulaires dont les triangles sont perpendiculaires entre eux.

2. Dispositif pour mesurer ou évaluer la position relative de deux parties de machine, outils ou pièces usinées, comprenant
- un premier boîtier (105) qui contient :
- un dispositif pour générer au moins deux rayons lumineux (12, 22) de section étroite, incluant au moins deux sources de lumière séparées (10, 20)
- un dispositif de multiplexage (100) pour l'alimentation électrique en alternance des au moins deux sources de lumière (10, 20),
- au moins un capteur sensible à la lumière (200) avec lequel peut être déterminé le barycentre des rayons lumineux (14, 24) incidents d'après deux coordonnées cartésiennes,
- une unité d'interprétation pour interpréter les signaux du capteur sensible à la lumière et un signal de synchronisation délivré par le multiplexeur,
- une combinaison de réflecteurs (400) logée dans un deuxième boîtier,
**caractérisé par** une combinaison de deux éléments réfléchissants (300, 330) qui se compose d'un miroir plan et d'un prisme triple.

3. Procédé d'utilisation d'un dispositif selon la revendication 1 ou 2, **caractérisé en ce que** les sources de lumière sont alimentées en alternance et d'après les indications d'un code de signal qui représente la cote de décalage translatoire et angulaire détectée par le composant de réception optoélectronique (200).

4. Procédé selon la revendication 3, les sources de lumière étant alimentées d'après les indications d'un procédé de transmission de données série asynchrone.

5. Procédé selon la revendication 3, les sources de lumière étant alimentées d'après les indications d'un procédé de transmission de données série synchrone.
